# DEMANDE DE BREVET EUROPEEN

(11) **EP 3 896 839 A1**
(43) Date de publication de la demande: **20.10.2021**
(21) Numéro de dépôt: 21167572.3
(22) Date de dépôt: 09.04.2021
(51) Int. Cl.: H02P 6/00, B62M 6/45, B62M 6/60, H02K 1/17, H02K 1/27, H02K 11/215, H02K 11/33, B62M 6/40, H02K 41/06

(54) **CELLULES ÉLÉMENTAIRES D'UN MOTEUR ÉLECTRIQUE ET MOTEUR ÉLECTRIQUE CORRESPONDANT**

(30) Priorité: 15.04.2020 FR 2003782
(71) Demandeur: Commissariat à l'énergie atomique et aux énergies alternatives, 75015 Paris (FR)
(72) Inventeur: CAROFF, Tristan, 38054 GRENOBLE CEDEX 09 (FR); BRULAIS, Sébastien, 38054 GRENOBLE CEDEX 09 (FR); ARRIZABALAGA, Gorka, 38054 GRENOBLE CEDEX 09 (FR); BERANGER, Marc, 38054 GRENOBLE CEDEX 09 (FR); MARIANNE, Julien, 38054 GRENOBLE CEDEX 09 (FR); THOMAS, Robin, 38054 GRENOBLE CEDEX 09 (FR)
(74) Mandataire: Brevalex

(57) **Abrégé**

L'invention concerne un ensemble de cellules élémentaires (10) d'un moteur électrique chaque cellule comprenant :
- une bobine (20) ;
- une carte qui comprend :
- un capteur de champ magnétique (30) destiné à fournir un signal magnétique (Sc) supérieur ou inférieur à une valeur pivot en fonction de l'amplitude et de l'orientation du champ magnétique ;
- un comparateur (40) destiné à délivrer au niveau d'une sortie une tension haute, une tension basse ou une tension neutre dès lors que le signal magnétique est, respectivement, supérieur à une valeur seuil haute, inférieur à une valeur seuil basse, ou compris entre la valeur seuil basse et la valeur seuil haute ;
- un pont en H (50) qui impose la circulation d'un courant électrique dans la bobine conductrice (20) dans un premier sens ou dans un second sens opposé au premier en fonction du signal délivré par le comparateur (40).

## Description

### DOMAINE TECHNIQUE

La présente invention se rapporte au domaine des dispositifs d'entraînement électromagnétique. En particulier, la présente invention concerne un moteur électrique pourvu de cellules élémentaires susceptibles d'interagir de manière électromagnétique avec des aimants permanents afin de mettre en mouvement une partie mobile par rapport à une partie fixe.

Les cellules élémentaires selon la présente invention sont notamment conçues, lorsqu'elles sont intégrées avec des aimants permanents pour former un moteur électrique, pour fonctionner de manière autonome.

### ÉTAT DE LA TECHNIQUE ANTÉRIEURE

Les dispositifs d'entraînement électromagnétique, bien connus de l'homme du métier, sont aujourd'hui mis en œuvre dans de nombreux domaines. En particulier, compte tenu des contraintes de circulation imposées dans les zones urbaines denses, il existe depuis quelques années un intérêt croissant pour la conception de moteurs électriques destinés à être mis en œuvre dans les vélos à assistance électrique.

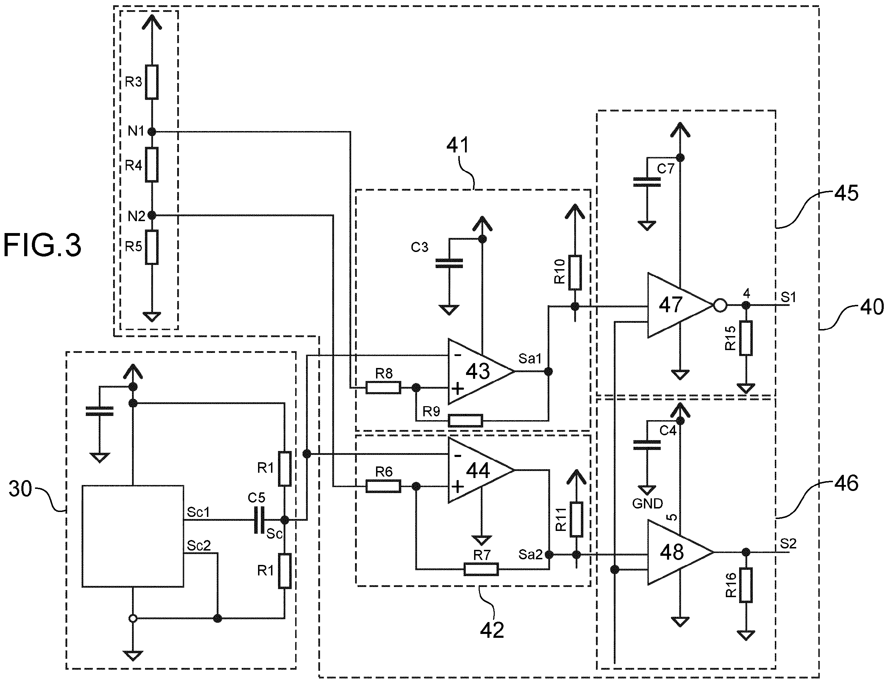

À cet égard, le document [1] cité à la fin de la description divulgue un moteur roue pourvu de bobines conductrices régulièrement disposées sur la jante de roue arrière d'un vélo, et des aimants installés sur une partie fixe. La partie fixe comprend notamment une pièce en forme de gouttière entourant partiellement la roue de manière à pouvoir mettre les aimants en regard des bobines conductrices. La circulation d'un courant électrique dans les bobines conductrices en regard d'aimants selon une séquence contrôlée permet alors de générer une interaction électromagnétique entre lesdits aimants et lesdites bobines provoquant ainsi l'entraînement en rotation de la roue du vélo. Cet ensemble est également pourvu d'une carte électronique de pilotage, telle qu'illustrée à la figure 3 du document [1]. Cette carte électronique est notamment destinée, d'une part, à déterminer la position relative des bobines par rapport aux aimants permanents, et d'autre part, à commander la circulation d'un courant électrique dans chacune des bobines à l'approche d'un aimant. L'intensité et le sens du courant circulant dans les bobines sont notamment choisis sorte que l'interaction électromagnétique entre les bobines et aimants considérés entretienne le mouvement de rotation de la roue.

Ce système d'entraînement électromagnétique n'est toutefois pas satisfaisant.

En effet, ce système propose un pilotage global qui doit être configuré et/ou dimensionné pour l'application visée, et ne peut par voie de conséquence être facilement transposé sur un vélo d'une masse différente ou pourvu de roue d'une taille différente.

Un système modulaire a pu être proposé dans le document [2] cité à la fin de la description. Néanmoins, ce système modulaire, à l'instar de celui présenté dans le document [1], comprend une carte de électronique de pilotage globale pour chacune des bobines conductrices. Ainsi, ce système requiert un système de câblage complexe assurant la communication entre la carte électronique et chacune des bobines, et qui rend par voie de conséquence sa mise en œuvre compliquée.

Un but de la présente invention est donc de proposer une cellule élémentaire destinée à être mise en œuvre dans un dispositif d'entraînement électromagnétique permettant de simplifier la conception de ce dernier.

Un autre but de la présente invention est également de proposer une cellule élémentaire d'un dispositif d'entraînement électromagnétique et susceptible de fonctionner de manière autonome.

Un autre but de la présente invention est également de proposer un kit qui comprend les cellules élémentaires et des aimants permanents et destiné à former un dispositif d'entraînement.

Un autre de la présente invention est également de pouvoir fonctionner de manière réversible, en tant que dispositif d'entraînement électromagnétique (moteur) et dispositif de génération électrique (alternateur).

Un autre but de la présente invention est de proposer une cellule élémentaire d'un moteur électrique susceptible de fonctionner de manière réversible afin de pouvoir récupérer de l'énergie, par exemple lors du freinage.

### EXPOSÉ DE L'INVENTION

Les buts de la présente invention sont, au moins en partie, atteints par une cellule élémentaire d'un moteur électrique qui comprend :
- une bobine conductrice ;
- une carte de contrôle qui comprend :
- un capteur de champ magnétique destiné à fournir un signal, dit signal magnétique, fonction de l'intensité du champ magnétique et de l'orientation de ce dernier, et qui est supérieur à une valeur pivot lorsque le champ magnétique est selon une première orientation et inférieur à la valeur pivot s'il est orienté selon une deuxième orientation opposée à la première orientation ;
- un double comparateur destiné à délivrer au niveau d'une sortie dudit double comparateur une tension haute, une tension basse ou une tension neutre dès lors que le signal magnétique est, respectivement, supérieur à une valeur seuil haute, inférieur à une valeur seuil basse, ou compris entre la valeur seuil basse et la valeur seuil haute ;
- un pont en H qui impose la circulation d'un courant électrique dans la bobine dans un premier sens ou dans un second sens opposé au premier sens lorsque le signal en sortie du double comparateur est égal, respectivement, à la tension haute ou la tension basse, et interrompt toute circulation de courant dans la bobine lorsque le signal est égal à la tension neutre.

Selon un autre aspect, la demande concerne un ensemble de cellules élémentaires d'un moteur électrique, chaque cellule élémentaire étant telle que définie plus haut et comprenant :
- une bobine conductrice ;
- une carte de contrôle, la carte de contrôle comprenant :
- un capteur de champ magnétique destiné à fournir un signal, dit signal magnétique, fonction de l'intensité d'un champ magnétique et de l'orientation de ce dernier, et qui est supérieur à une valeur pivot lorsque le champ magnétique est selon une première orientation et inférieur à la valeur pivot s'il est orienté selon une deuxième orientation opposée à la première orientation ;

- un double comparateur destiné à délivrer au niveau d'une sortie dudit double comparateur une tension haute, une tension basse ou une tension neutre dès lors que le signal magnétique est, respectivement, supérieur à une valeur seuil haute, inférieur à une valeur seuil basse, ou compris entre la valeur seuil basse et la valeur seuil haute ;
- un pont en H qui impose la circulation d'un courant électrique dans la bobine conductrice dans un premier sens ou dans un second sens opposé au premier sens lorsque le signal en sortie du double comparateur est égal, respectivement, à la tension haute ou la tension basse, et interrompt toute circulation de courant dans la bobine conductrice lorsque le signal est égal à la tension neutre.

Ainsi, chaque cellule élémentaire de l'ensemble peut fonctionner de manière autonome.

Selon un mode de mise en œuvre, le capteur de champ magnétique comprend un capteur à effet Hall.

Selon un mode de mise en œuvre, le capteur de champ magnétique comprend un filtre à pont diviseur de tension destiné à imposer à la valeur pivot une valeur prédéterminée, le filtre à pont diviseur de tension comprenant avantageusement deux résistances électriques et une capacité.

Selon un mode de mise en œuvre, le double comparateur comprend des moyens de symétrisation de sorte que les différences entre la valeur seuil haute et la valeur pivot d'une part, et la valeur pivot et la valeur seuil basse d'autre part soient égales.

Selon un mode de mise en œuvre, le double comparateur comprend deux comparateurs dits, respectivement, comparateur haut et comparateur bas, chaque comparateur comprenant un amplificateur opérationnel pourvu d'une entrée négative au niveau de laquelle le signal magnétique est injecté et d'une entrée positive déterminant la valeur seuil haute pour le comparateur haut et la valeur seuil basse pour le comparateur bas.

Selon un mode de mise en œuvre, les moyens de symétrisation comprennent la mise en œuvre d'une porte logique inverseuse intercalée entre la sortie du comparateur haut et le pont en H, et d'une porte logique suiveuse intercalée entre la sortie du comparateur bas et le pont en H.

Selon un mode de mise en œuvre, les moyens de symétrisation comprennent également un unique pont diviseur de tension formé par trois résistances, et destiné à imposer la valeur seuil haute au niveau de l'entrée positive de l'amplificateur opérationnel du comparateur haut et la valeur seuil basse au niveau de l'entrée négative de l'amplificateur opérationnel du comparateur bas.

Selon un mode de mise en œuvre, la carte de contrôle comprend en outre au moins une capacité, l'au moins une capacité étant agencée pour décharger l'énergie emmagasinée dans la bobine à l'instant où le pont en H impose ou interrompt la circulation d'un courant dans la bobine.

L'invention concerne également un kit pourvu d'une pluralité de cellules élémentaires telles que définies plus haut, et d'une pluralité d'aimants permanents, les cellules élémentaires étant destinées à être disposées sur l'une d'une partie fixe et d'une partie mobile, dite première partie, d'un dispositif, et les aimants permanents étant destinés à être disposés sur l'autre de la partie fixe et de la partie mobile, dite deuxième partie, afin de former un moteur électrique adapté pour mettre en mouvement la partie mobile au regard de la partie fixe.

L'invention concerne également un dispositif pourvu d'une partie fixe et d'une partie mobile par rapport à ladite partie fixe, et qui comprend un moteur électrique destiné à mettre en mouvement la partie mobile par rapport à la partie fixe, le moteur électrique comprenant :
- une pluralité de cellules élémentaires, telles que définies plus haut, disposées sur l'une de la partie fixe ou de la partie mobile, dite première partie ;
- une pluralité d'aimants permanents disposés sur l'autre de la partie fixe ou de la partie mobile, dite deuxième partie ;
- une source de courant disposée sur la première partie ou sur la deuxième partie, et destinée à alimenter en courant les bobines des cellules élémentaires via un pilotage par la carte de contrôle de chacune desdites cellules élémentaires.

Selon un mode de mise en œuvre, les cellules élémentaires sont régulièrement disposées selon un premier pas sur la première partie.

Selon un mode de mise en œuvre, les aimants sont disposés régulièrement selon un deuxième pas sur la deuxième partie, et de sorte que leur polarisation magnétique soit en alternance selon une première direction et selon une deuxième direction opposée à la première direction, la première direction étant perpendiculaire à la direction du mouvement de la partie mobile susceptible d'intervenir sous l'action du moteur électrique.

Selon un mode de mise en œuvre, les cellules élémentaires et les aimants permanents sont agencés, respectivement, sur la première partie et sur la deuxième partie, de sorte que le mouvement de la partie mobile par rapport à la partie fixe permette de mettre successivement chaque bobine de chaque cellule élémentaire au moins partiellement en regard de chaque aimant permanent, et de sorte qu'une bobine en regard d'un aimant et traversée par un courant électrique soit en interaction électromagnétique avec ledit aimant.

Selon un mode de mise en œuvre, chaque bobine comprend deux bras latéraux séparés d'une distance égale au deuxième pas, la cellule élémentaire étant agencée pour permettre à chaque bras latéral de la bobine qu'elle porte d'être en interaction électromagnétique avec, respectivement, l'un et l'autre de deux aimants adjacents.

Selon un mode de mise en œuvre, le capteur de champ magnétique de chaque cellule élémentaire, est agencé pour détecter le champ magnétique d'un aimant permanent donné avant que ce dernier ne soit en interaction électromagnétique avec la bobine portée par ladite cellule.

Selon un mode de mise en œuvre, ledit dispositif comprend un vélo.

### BRÈVE DESCRIPTION DES DESSINS

D'autres caractéristiques et avantages apparaîtront dans la description qui va suivre d'une cellule élémentaire et de sa mise en œuvre selon l'invention, donnés à titre d'exemples non limitatifs, en référence aux dessins annexés dans lesquels :
La figure 1 est une représentation schématique fonctionnelle d'une cellule élémentaire selon la présente invention, le figure 1 illustre notamment la connectique entre les différents éléments formant la cellule fonctionnelle et la forme des signaux en entrée et sortie ;
La figure 2 est une représentation schématique d'un capteur de champ magnétique susceptible d'être mis en œuvre dans le cadre de la présente invention ;
La figure 3 est une représentation schématique d'un double comparateur mettant en œuvre des moyens de symétrisation ainsi qu'un pont diviseur pourvu de trois résistances, la figure 3 représente par ailleurs la connexion du capteur de champ magnétique au double comparateur selon la présente invention ;
La figure 4 est une représentation schématique d'un pont en H selon la présente invention, alimenté au niveau de bornes positive et négative par un courant fourni par une batterie ;
La figure 5 est une représentation schématique du pont en H lorsque le double comparateur impose une tension haute au niveau de la grille du premier et du quatrième transistor de manière à rendre ces derniers passants et ainsi faire circuler un courant électrique dans le premier sens dans la bobine ;
La figure 6 est une représentation schématique du pont en H lorsque le double comparateur impose une tension haute au niveau de la grille du deuxième et du troisième transistor de manière à rendre ces derniers passants et ainsi faire circuler un courant électrique dans le deuxième sens dans la bobine ;
La figure 7a représente un vélo équipé au niveau de sa roue arrière d'un dispositif d'entraînement électromagnétique selon la présente invention ;
La figure 7b représente la roue arrière du vélo, notamment la figure 7b illustre le positionnement des cellules élémentaires sur la jante de la roue arrière du vélo de la figure 7a ;
La figure 8 représente un agencement particulier d'aimants permanents sur une première section et une deuxième section disposées de part et d'autre de la jante de la roue du vélo ;
La figure 9 est une représentation schématique de l'interaction entre une bobine conductrices et deux aimants permanents dits, respectivement, aimant amont et aimant aval, la figure 9 illustre notamment le sens de la force électromagnétique exercée par l'aimant amont et par l'aimant aval sur, respectivement, le bras amont et le bras aval lorsque ces derniers sont parcourus par un courant électrique ;
La figure 10 est une photo d'une roue de vélo sur laquelle sont installées des cellules élémentaires selon la présente invention ;
La figure 11 est une vue de dessus d'une bobine conductrice susceptible d'être mise en œuvre dans le cadre de la présente invention et sur laquelle sont repérées certaines des caractéristiques dimensionnelles de ladite bobine ;
La figure 12 est une représentation graphique du signal magnétique (selon l'axe vertical, en volts) délivré par le capteur de champ magnétique d'une cellule élémentaire et relatif à un champ magnétique mesuré en fonction du temps (axe horizontal, en secondes) lors de la rotation d'une roue de vélo ;
La figure 13 est un grossissement de la figure 12, et représente en superposition au signal magnétique, le signal délivré par le double comparateur au niveau de sa première sortie et de sa deuxième sortie.

### EXPOSÉ DÉTAILLÉ DE MODES DE RÉALISATION PARTICULIERS

La présente invention concerne un dispositif d'entraînement électromagnétique (ou moteur électrique) destiné à mettre en mouvement un partie mobile par rapport à une partie fixe. Le dispositif d'entraînement selon la présente invention est modulaire et comprend une pluralité d'aimants permanents ainsi qu'une pluralité de cellules élémentaires pourvues chacune d'une bobine conductrice et d'une carte de contrôle permettant auxdites cellules élémentaires de fonctionner de manière autonome.

Les cellules élémentaires sont notamment disposées sur l'une de la partie mobile et de la partie fixe, dite première partie, tandis que les aimants permanents sont disposés sur l'autre de la partie mobile et de la partie fixe, dite deuxième partie.

Plus particulièrement, les cellules élémentaires et les aimants permanents sont disposés de manière à, lorsque la partie mobile est en mouvement par rapport à la partie fixe, mettre en regard successivement lesdites cellules élémentaires avec lesdits aimants permanents.

La carte de contrôle est par ailleurs configurée pour permettre un fonctionnement autonome de chacune des cellules élémentaires. Plus particulièrement, la carte de contrôle est adaptée pour permettre un fonctionnement des cellules élémentaires aussi bien en mode moteur qu'en mode générateur.

Notamment, la carte de contrôle comprend un capteur de champ magnétique, un double comparateur, ainsi qu'un pont en H. Ces trois éléments sont à cet égard agencés pour imposer la circulation d'un courant électrique selon l'un ou l'autre d'un premier et d'un deuxième sens en fonction d'une orientation et d'une intensité d'un champ magnétique à proximité de la bobine portée la carte de contrôle considérée.

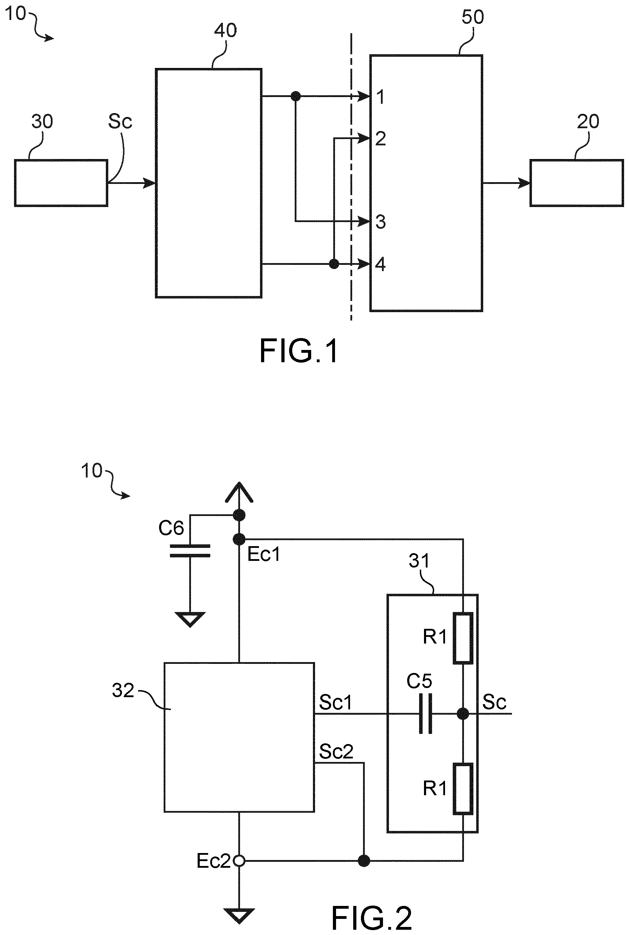

La figure 1 est une représentation schématique fonctionnelle d'une cellule élémentaire 10 selon la présente invention.

La cellule élémentaire 10 comprend une bobine conductrice 20. La bobine conductrice 20 est notamment formée d'un enroulement de fil conducteur, par exemple un fil de cuivre.

La bobine conductrice 20 peut par ailleurs comprendre deux bras latéraux séparés d'une distance L et dits respectivement bras amont et bras aval.

La cellule élémentaire 10 est également pourvue d'un capteur de champ magnétique 30 destiné à fournir, au niveau d'une sortie principale Sc, un signal, dit signal magnétique, fonction de l'intensité du champ magnétique et de l'orientation dudit champ magnétique (figures 1 et 2).

En particulier, le signal magnétique est supérieur à une valeur pivot lorsque le champ magnétique est selon une première orientation et inférieur à ladite valeur pivot s'il est orienté selon une deuxième orientation opposée à la première orientation.

Lorsqu'il est fait référence à une orientation du champ magnétique, il est entendu que cette dernière est définie par rapport au capteur de champ magnétique.

En outre, il est également entendu, sans qu'il soit nécessaire de le préciser que l'écart du signal magnétique par rapport à la valeur pivot est une mesure de l'amplitude du champ magnétique. Plus particulièrement, plus cet écart est important, plus l'amplitude du champ magnétique est importante.

Le capteur de champ magnétique 30 peut, selon un mode de mise en œuvre particulièrement intéressant, comprendre un capteur à effet Hall.

Le capteur de champ magnétique 30 peut comprendre un filtre à pont diviseur de tension 31 destiné à imposer à la valeur pivot une valeur prédéterminée (figure 2). Ce filtre à pont diviseur de tension 31 est particulièrement avantageux dès lors qu'une pluralité de cellules élémentaires doit être considérée. En effet, la mise en œuvre du filtre à pont diviseur de tension permet d'imposer la même valeur pivot à chacun des capteurs de champ magnétique 30 portés par les cellules élémentaires 10. Le pont 31 assure également une fonction de filtrage destinée à supprimer la composant continue et atténuer, voire supprimer, un signal basse fréquence susceptible d'être délivré au niveau de la sortie principale Sc du capteur de champ magnétique 30. Par « basse fréquence », on entend une fréquence inférieure à 2 Hz.

Le capteur de champ magnétique 30 selon la présente invention peut comprendre une cellule principale 32 sensible à l'orientation et à l'amplitude du champ magnétique (seul élément sensible au champ magnétique dans le capteur de champ magnétique 30). La cellule principale 32 peut, à cet égard, comprendre deux bornes d'entrée Ec1 et Ec2 connectées respectivement, à un potentiel V et à un potentiel de masse. Le potentiel V, par exemple égal à 5 Volt, est destiné à alimenter le capteur de champ magnétique.

La cellule principale 32 peut également comprendre deux sorties dites, respectivement, première sortie de cellule Sc1 et deuxième sortie de cellule Sc2. En particulier, la deuxième sortie de cellule Sc2 est connectée directement à la borne d'entrée Ec2, et se voit donc imposer le potentiel de masse. La première sortie de cellule Sc1 est connectée à la sortie principale Sc. Le filtre à pont diviseur de tension 31 peut pour sa part comprendre une capacité C5 ainsi que deux résistances électriques R1 et R2. La capacité C5 s'interpose en particulier entre la première sortie Sc1 et la sortie principale Sc, tandis que les résistances R1 et R2 relient la sortie principale avec, respectivement, la borne d'entrée Ec1 et la borne d'entrée Ec2. Par ailleurs, les résistances R1 et R2 peuvent présenter la même résistance électrique.

Enfin, le capteur de champ magnétique 30 peut comprendre une capacité C6 reliant le potentiel de masse et le potentiel V.

La cellule élémentaire 10 selon la présente invention comprend également un double comparateur 40 destiné à délivrer, au niveau d'une première sortie S1, une tension haute, et une tension basse au niveau d'une deuxième sortie S2 dès lors que le signal magnétique est, respectivement, supérieur à une valeur seuil haute, ou inférieur à une valeur seuil basse. Le double comparateur 40 est également adapté pour délivrer une tension neutre au niveau de chacune de ses deux sorties dès lors que le signal magnétique est compris entre la valeur seuil basse et la valeur seuil haute (figure 1 et 3).

Le double comparateur 40 selon la présente invention peut comprendre des moyens de symétrisation de sorte que les différences entre la valeur seuil haute et la valeur pivot d'une part, et la valeur pivot et la valeur seuil basse d'autre part soient égales.

Notamment, ces moyens de symétrisation font appel à un mode de connexion particulier de la sortie principale Sc du capteur de champ magnétique 30 et le double comparateur 40.

En particulier, le double comparateur 40 comprend deux comparateurs dits, respectivement, comparateur haut 41 et comparateur bas 42.

Le comparateur haut 41 et le comparateur bas 42 comprennent, respectivement, un premier amplificateur opérationnel 43 et un deuxième amplificateur opérationnel 44, pourvus chacun d'une entrée négative au niveau de laquelle le signal magnétique est injecté et d'une entrée positive déterminant la valeur seuil haute pour le comparateur haut 41 et la valeur seuil basse pour le comparateur bas 42.

Le comparateur haut 41 comprend par ailleurs deux résistances R8 et R9.

En particulier, la résistance R8 est intercalée entre l'entrée positive du premier amplificateur opérationnel 43 et une première entrée de référence N1 dudit comparateur haut, tandis que la résistance R9 relie l'entrée positive du premier amplificateur opérationnel à sa sortie Sa1.

Le comparateur bas 42 comprend deux résistances R6, R7.

En particulier, la résistance R6 est intercalée entre l'entrée positive du deuxième amplificateur opérationnel 44 et une deuxième entrée de référence N2 dudit comparateur bas, tandis que la résistance R7 relie l'entrée positive du deuxième amplificateur opérationnel à sa sortie Sa2.

Deux résistances R10 et R11 sont également intercalées entre une alimentation de potentiel V (par exemple 5 volts) et, respectivement, la sortie Sa1 et la sortie Sa2.

Enfin, le double comparateur 40 comprend également un unique pont diviseur formé dans trois résistances connectées en série R3, R4 et R5. Notamment, le nœud commun aux résistances R3 et R4 d'une part, et le nœud commun aux résistances R4 et R5 d'autre part, forment, respectivement, la première entrée de référence N1 et la deuxième entrée de référence N2.

Les moyens de symétrisation peuvent également comprendre la mise en œuvre d'une porte logique inverseuse 45 intercalée entre la sortie Sa1 du comparateur haut et la première sortie S1, et d'une porte logique suiveuse 46 intercalée entre la sortie Sa2 du comparateur bas et la deuxième sortie S2.

La porte inverseuse 45 comprend notamment un amplificateur opérationnel, dit troisième amplificateur opérationnel 47, ainsi qu'une résistance R15 et une capacité C7 tel qu'illustré à la figure 3.

La porte suiveuse 46 comprend un amplificateur opérationnel, dit quatrième amplificateur opérationnel 48, ainsi qu'une résistance R16 et une capacité C4 tel qu'illustré à la figure 3.

La cellule élémentaire 10 selon la présente invention comprend en outre un pont en H 50. Le pont en H 50 est notamment destiné à imposer la circulation d'un courant électrique dans la bobine conductrice 20 dans un premier sens ou dans un second sens opposé au premier sens lorsque le signal en sortie du double comparateur 40 est égal, respectivement, à la tension haute ou la tension basse. Toute circulation de courant dans la bobine est par ailleurs interrompue lorsque le signal est égal à la tension neutre.

Le pont en H peut notamment comprendre deux branches dites, respectivement, première branche et deuxième branche, connectées en parallèle entre deux bornes d'alimentation, dites, respectivement, borne positive (+) et borne négative (-).

La première branche comprend deux transistors dits, respectivement, premier transistor T1 et troisième transistor T3, connectés en série.

De manière équivalente, la deuxième branche comprend également deux transistors dits, respectivement, deuxième transistor T2 et quatrième transistor T4 également connectés en série.

La bobine conductrice 20 est connectée au pont en H 50 au niveau du nœud commun B1 au premier et troisième transistor, et au niveau du nœud commun B2 au deuxième et troisième transistor.

Enfin, le fonctionnement de la cellule élémentaire 10 est assuré par une alimentation électrique connectée au niveau de la borne positive (+) et de la borne négative (-).

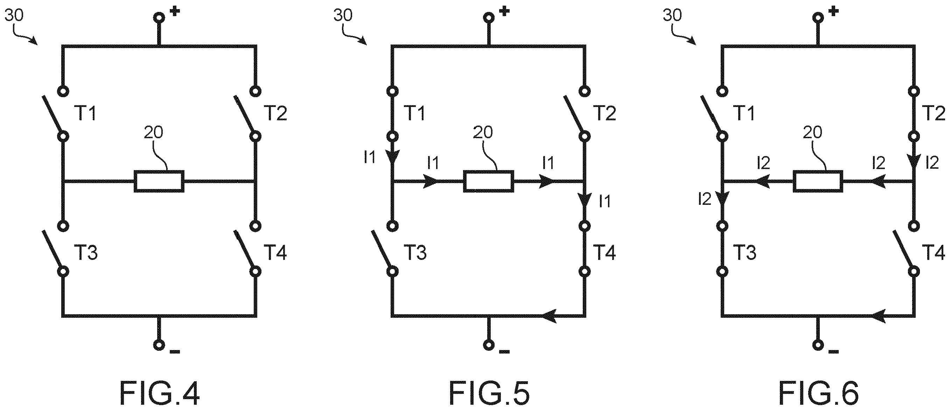

Ainsi, en fonctionnement, dès lors que le signal magnétique est supérieur à la valeur seuil haute, le double comparateur 40 impose une tension haute au niveau des grilles des transistors T1 et T4 supérieure à leur tension de seuil. Ces derniers deviennent donc passant, tandis que les transistors T2 et T3 restent non passant. Il en résulte une circulation d'un courant I1, dans le premier sens dans la bobine 20 (figure 5).

A contrario, si le signal magnétique est inférieur à la valeur seuil basse, le double comparateur 40 impose une tension basse au niveau des grilles des transistors T2 et T3 supérieure à leur tension de seuil. Ces derniers deviennent donc passant, tandis que les transistors T1 et T4 restent non passant. Il en résulte une circulation d'un courant I2, dans le deuxième sens dans la bobine 20 (figure 6).

Enfin, si le signal magnétique est compris entre la valeur seuil basse et la valeur seuil haute, le double comparateur 40 impose la tension neutre au niveau des grilles de chacun des transistors T1 à T4, de sorte que ces derniers soient non passants.

La mise en œuvre des moyens de symétrisation permet de pallier les problèmes de discontinuité liés à la résistance de sortie non nulle du capteur de champ magnétique. Ces problèmes de discontinuité sont notamment susceptibles d'être observés lorsque le double comparateur commute vers sa tension haute. En outre, la portes logique inverseuse et la porte logique suiveuse permettent de dissocier les sorties Sa1 et Sa2 de l'entrée de pont en H, et de sécuriser la carte de contrôle en cas de disfonctionnement du comparateur haut et/ou du comparateur bas. Un tel disfonctionnement pourrait par exemple se traduire par un signal indéterminé au niveau de l'une ou l'autre des sorties Sa1 et Sa2.

Plus généralement, la cellule élémentaire peut, lorsqu'elle est mise en œuvre dans un dispositif d'entraînement tel qu'un moteur électrique, fonctionner de manière autonome et de concert avec d'autres cellules élémentaires.

L'invention concerne également un kit pourvu d'une pluralité de cellules élémentaires et d'une pluralité d'aimants permanents, et destiné à former un dispositif d'entraînement électromagnétique tel qu'un moteur électrique.

En particulier, les cellules élémentaires sont destinées à être disposées sur l'une d'une partie fixe et d'une partie mobile, dite première partie, d'un dispositif, et les aimants permanents sont destinés à être disposés sur l'autre de la partie fixe et de la partie mobile, dite deuxième partie, afin de former le moteur électrique adapté pour mettre en mouvement la partie mobile au regard de la partie fixe.

La mise en œuvre de ce kit ne nécessite pas de dimensionnement particulier des cellules élémentaires 10, et est par conséquent adaptable sur tout type de dispositif.

Néanmoins, il est avantageux de considérer des aimants qui présentent l'aimantation la plus importante possible. Ainsi, les aimants permanents peuvent comprendre un alliage NdFeB, et former, par exemple, des parallélépipèdes de 40 mm de longueur, de 20 mm de largeur et de 10 mm de hauteur.

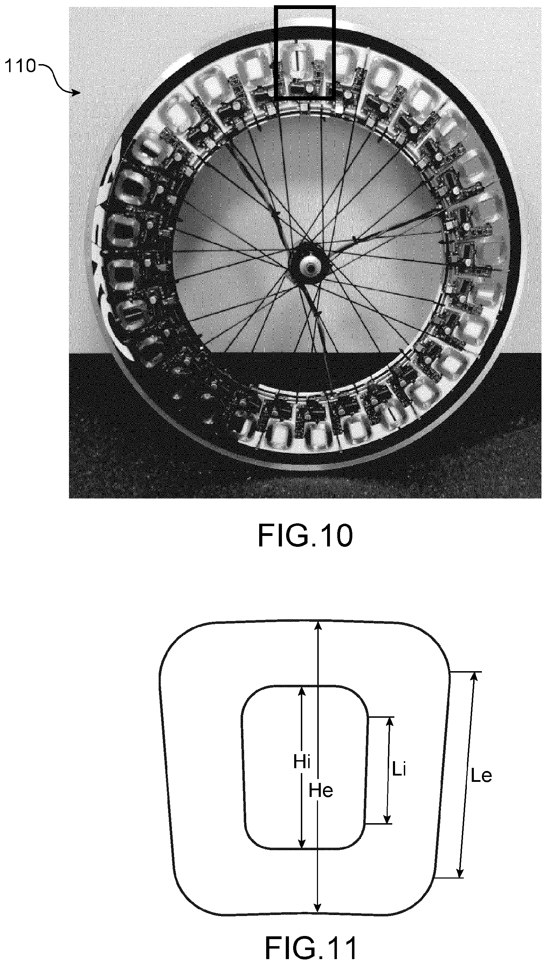

Le dimensionnement des bobines conductrices est, pour sa part, destiné à limiter d'une part la densité de courant circulant dans lesdites bobines et d'autre part le coefficient de foisonnement. Par ailleurs, ce dimensionnement a également pour objectif d'assurer un fonctionnement optimal des cellules élémentaires en fonction de la tension d'alimentation envisagée, par exemple pour une tension d'alimentation de 36 V. Ainsi, le tableau liste les caractéristiques géométriques (repérées sur la figure 11) permettant de répondre aux exigences présentées ci-avant :

| Hauteur intérieure /extérieure de la bobine ([mm]) | Longueur intérieure/extérieure de la bobine ([mm]) | Épaisseur de la bobine ([mm]) | Nombre spires | Diamètre fil conducteur ([mm]) | Foisonnement |
|---|---|---|---|---|---|
| Hi = 25/ He = 45 | Li = 18/ Le = 38 | E = 5 | 250 | 0,4 | 62,8 [%] |

L'invention concerne également un dispositif pourvu d'une partie fixe et d'une partie mobile par rapport à ladite partie fixe, et qui comprend un moteur électrique destiné à mettre en mouvement la partie mobile par rapport à la partie fixe.

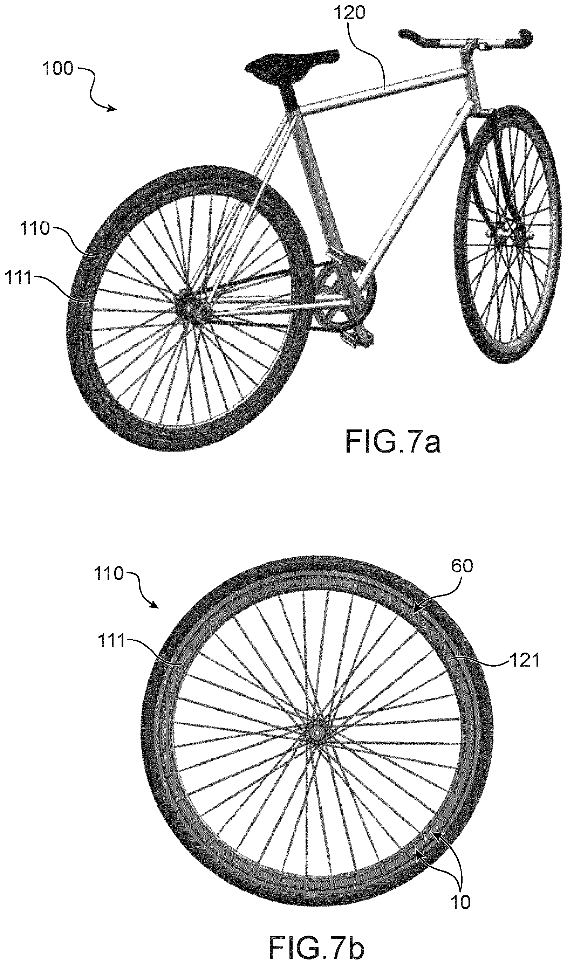

La suite de la description se limitera à un vélo 100, et notamment un vélo à assistance électrique (figure 7a). Ainsi, la partie mobile est constituée par une roue 110 du vélo, et notamment sa roue arrière, tandis que la partie fixe est formée par le cadre 120 dudit vélo 100 (figures 7a et 7b).

L'invention ne peut toutefois être limitée à ce seul aspect, et l'homme du métier pourra, sur la base de la présente description, adapter le dispositif d'entraînement électromagnétique à d'autres dispositifs. Par exemple, le dispositif d'entraînement électromagnétique peut être mis en œuvre pour la réalisation d'un convoyeur.

Ainsi, le moteur électrique selon la présente invention comprend une pluralité de cellules élémentaires 10 disposées sur l'une de la partie fixe ou de la partie mobile, dite première partie.

Le moteur électrique comprend également une pluralité d'aimants permanents 60 disposés sur l'autre de la partie fixe ou de la partie mobile, dite deuxième partie.

Par souci de simplification, et dans toute la suite de l'énoncé de la présente invention, la roue arrière 110 et le cadre 120 sont associés, respectivement, à la première partie et la deuxième partie. Il est toutefois entendu que l'agencement inverse fait également partie intégrante de la présente invention.

Ainsi, selon cette configuration, les cellules élémentaires 10 peuvent être régulièrement disposées selon un premier pas sur la roue arrière 110 (figure 10).

De manière équivalente, les aimants permanents 60 peuvent également être disposés régulièrement selon un deuxième pas sur le cadre 120 du vélo.

Plus particulièrement, les aimants permanents 60 sont disposés sur un support 121 du cadre 120. Le support 120 est notamment conforme à la forme de la jante 111 et est disposé de sorte que les aimants permanents 60 soient en regard de la jante 110 et plus particulièrement de cellules élémentaires 10 portées par cette dernière.

Les aimants permanents 60 sont également agencés de sorte que leur polarisation magnétique soit en alternance selon une première direction et selon une deuxième direction opposée à la première direction, la première direction étant perpendiculaire à la direction du mouvement de la roue susceptible d'intervenir sous l'action du moteur électrique. En d'autres termes, la première direction et la deuxième direction sont parallèles à l'axe de rotation de la roue arrière 110.

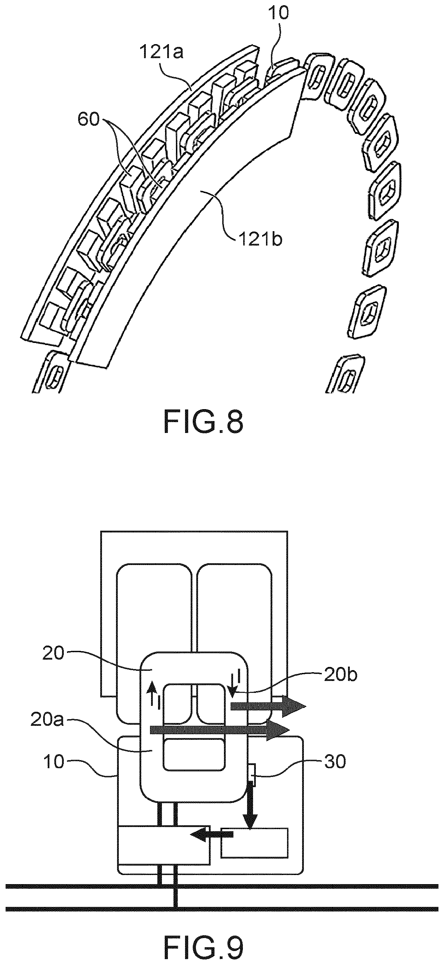

Le support 121 peut comprendre deux sections dites respectivement première section 121a et deuxième section 121b disposées de part et d'autre de la roue arrière (figure 8). Cet agencement permet notamment de doubler le nombre d'aimants permanents 60 et par voie de conséquence augmenter la puissance du moteur électrique.

Les cellules élémentaires 10 et les aimants permanents 60 sont notamment agencés, respectivement, sur la roue arrière 110 et sur le support 120, de sorte que le mouvement de la roue arrière 110 par rapport au cadre 120 permette de mettre successivement chaque bobine 20 de chaque cellule élémentaire 10 au moins partiellement en regard de chaque aimant permanent 60. Plus particulièrement, les cellules élémentaires 10 et les aimants permanents 60 présentent un agencement relatif de sorte que lorsque le bras amont d'une bobine conductrice donnée est en interaction électromagnétique avec un aimant permanent donné, dit aimant amont, le bras aval de cette même bobine est en interaction électromagnétique avec l'aimant permanent, dit aimant aval, directement adjacent à l'aimant amont dans le sens de rotation de la roue (figure 9). Selon cet agencement, la distance L séparant le bras amont 20a du bras aval 20b est avantageusement égale au deuxième pas.

Par « en interaction électromagnétique », on entend un bras (amont ou aval) parcouru par un courant électrique et directement sous l'influence des lignes de champ magnétique de l'aimant permanent considéré.

Enfin, chaque cellule élémentaire peut être agencée de sorte que le capteur de champ magnétique soit disposé en aval, dans le sens de rotation de la roue, du bras aval de la bobine conductrice. Ainsi, selon cette configuration, lors du mouvement de rotation de la roue 110, le capteur de champ magnétique 30 est en mesure détecter en avance de phase le champ magnétique d'un aimant à proximité de la bobine.

Le vélo comprend également une source de courant disposée dans le moyeu de la roue 110 ou supportée par le cadre 120. Cette source de courant est notamment destinée à alimenter en courant les bobines des cellules élémentaires via un pilotage par la carte de contrôle de chacune desdites cellules élémentaires.

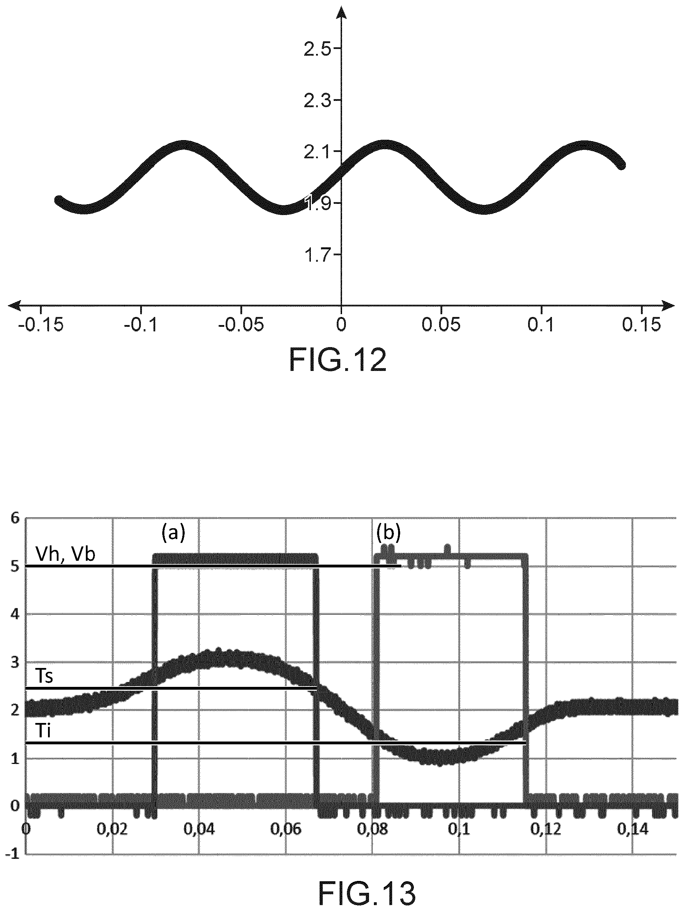

Ainsi, le moteur électrique du vélo lorsqu'il fonctionne, permet d'entraîner en rotation la roue arrière. Plus particulièrement, lorsqu'une cellule élémentaire passe successivement devant l'alternance d'aimants permanents disposés sur le 121, le capteur de champ magnétique 30 mesure successivement le champ magnétique desdits aimants. Si la vitesse de rotation de la roue est constance, le signal magnétique a une forme sinusoïdale (figure 12). Ce signal magnétique est directement injecté au niveau de l'entrée négative du premier amplificateur opérationnel 43 et du deuxième amplificateur opérationnel 44. Lorsque, le signal magnétique est supérieur à la valeur seuil haute Ts, le double comparateur délivre au niveau de première sortie S1, une tension haute Vh (courbe (a) du graphique de la figure 13), et au niveau de sa deuxième sortie S2 une tension nulle (courbe (b) du graphique de la figure 13).

De manière équivalente, lorsque le signal magnétique est inférieur à la valeur seuil basse Ti, le double comparateur délivre au niveau de première sortie S1, une tension nulle (courbe (a) du graphique de la figure 13), et au niveau de sa deuxième sortie S2 une tension basse Vb (courbe (b) du graphique de la figure 13).

Ainsi, la détection du champ magnétique au niveau de chacune des cartes de contrôle permet de commander de manière autonome le sens et l'intensité du courant traversant les bobines, et par voie de conséquence, entraîner en rotation la roue arrière du vélo.

### REFERENCES

[1] US 2018/0244341 ;
[2] N.R. Brown et al., "Power Converter Design for an Integrated Modular Motor Drive », IEEE Industry Applications Annual Meeting, 2007.

## Revendications

1. Ensemble de cellules élémentaires (10) d'un moteur électrique, chaque cellule élémentaire comprenant :
- une bobine conductrice (20) ;
- une carte de contrôle, la carte de contrôle comprenant :
- un capteur de champ magnétique (30) destiné à fournir un signal, dit signal magnétique, fonction de l'intensité d'un champ magnétique et de l'orientation de ce dernier, et qui est supérieur à une valeur pivot lorsque le champ magnétique est selon une première orientation et inférieur à la valeur pivot s'il est orienté selon une deuxième orientation opposée à la première orientation ;
- un double comparateur (40) destiné à délivrer au niveau d'une sortie dudit double comparateur (40) une tension haute, une tension basse ou une tension neutre dès lors que le signal magnétique est, respectivement, supérieur à une valeur seuil haute, inférieur à une valeur seuil basse, ou compris entre la valeur seuil basse et la valeur seuil haute ;
- un pont en H qui impose la circulation d'un courant électrique dans la bobine conductrice (20) dans un premier sens ou dans un second sens opposé au premier sens lorsque le signal en sortie du double comparateur (40) est égal, respectivement, à la tension haute ou la tension basse, et interrompt toute circulation de courant dans la bobine conductrice (20) lorsque le signal est égal à la tension neutre.

2. Ensemble selon la revendication 1, le capteur de champ magnétique (30) comprenant un capteur à effet Hall.

3. Ensemble selon la revendication 2, le capteur de champ magnétique (30) étant associé à un filtre à pont diviseur de tension (31) destiné à éliminer la composante continue et imposer à la valeur pivot une valeur prédéterminée, le filtre à pont diviseur de tension (31) comprenant avantageusement deux résistances électriques R1 et R2 et une capacité C5.

4. Ensemble selon la revendication 3, dans laquelle le double comparateur (40) comprend des moyens de symétrisation de sorte que les différences entre la valeur seuil haute et la valeur pivot d'une part, et la valeur pivot et la valeur seuil basse d'autre part soient égales.

5. Ensemble selon la revendication 4, dans lequel le double comparateur (40) comprend deux comparateurs dits, respectivement, comparateur haut (41) et comparateur bas (42), chaque comparateur comprenant un amplificateur opérationnel pourvu d'une entrée négative au niveau de laquelle le signal magnétique est injecté et d'une entrée positive déterminant la valeur seuil haute pour le comparateur haut (41) et la valeur seuil basse pour le comparateur bas (42).

6. Ensemble selon la revendication 5, les moyens de symétrisation comprenant une porte logique inverseuse (45) intercalée entre la sortie (Sa1) du comparateur haut (41) et le pont en H, et une porte logique suiveuse (46) intercalée entre la sortie (Sa2) du comparateur bas (42) et le pont en H.

7. Ensemble selon la revendication 6, les moyens de symétrisation comprenant également un unique pont diviseur de tension formé par trois résistances R3, R4 et R5, et destiné à imposer la valeur seuil haute au niveau de l'entrée positive de l'amplificateur opérationnel du comparateur haut (41) et la valeur de seuil basse au niveau de l'entrée négative de l'amplificateur opérationnel du comparateur bas (42).

8. Ensemble selon la revendication 7, la carte de contrôle comprenant en outre au moins une capacité, l'au moins une capacité étant agencée pour décharger l'énergie emmagasinée dans la bobine conductrice (20) à l'instant où le pont en H impose ou interrompt la circulation d'un courant dans la bobine conductrice (20).

9. Kit pourvu d'un ensemble de cellules élémentaires (10) selon l'une des revendications 1 à 8, et d'une pluralité d'aimants permanents (60), les cellules élémentaires (10) étant destinées à être disposées sur l'une d'une partie fixe et d'une partie mobile, dite première partie, d'un dispositif, et les aimants permanents étant destinés à être disposés sur l'autre de la partie fixe et de la partie mobile, dite deuxième partie, afin de former un moteur électrique adapté pour mettre en mouvement la partie mobile au regard de la partie fixe.

10. Dispositif pourvu d'une partie fixe et d'une partie mobile par rapport à ladite partie fixe, et qui comprend un moteur électrique destiné à mettre en mouvement la partie mobile par rapport à la partie fixe, le moteur électrique comprenant :
- un ensemble de cellules élémentaires (10) selon la revendication 8, les cellules étant disposées sur l'une de la partie fixe ou de la partie mobile, dite première partie ;
- une pluralité d'aimants permanents (60) disposés sur l'autre de la partie fixe ou de la partie mobile, dite deuxième partie ;
- une source de courant disposée sur la première partie ou sur la deuxième partie, et destinée à alimenter en courant les bobines conductrices (20) des cellules élémentaires via un pilotage par la carte de contrôle de chacune desdites cellules élémentaires.

11. Dispositif selon la revendication 10, dans lequel les cellules élémentaires sont régulièrement disposées selon un premier pas sur la première partie.

12. Dispositif selon la revendication 11, dans lequel les aimants sont disposés régulièrement selon un deuxième pas sur la deuxième partie, et de sorte que leur polarisation magnétique soit en alternance selon une première direction et selon une deuxième direction opposée à la première direction, la première direction étant perpendiculaire à la direction du mouvement de la partie mobile susceptible d'intervenir sous l'action du moteur électrique.

13. Dispositif selon la revendication 12, dans lequel les cellules élémentaires et les aimants permanents sont agencés, respectivement, sur la première partie et sur la deuxième partie, de sorte que le mouvement de la partie mobile par rapport à la partie fixe permette de mettre successivement chaque bobine conductrice (20) de chaque cellule élémentaire (10) au moins partiellement en regard de chaque aimant permanent, et de sorte qu'une bobine conductrice (20) en regard d'un aimant et traversée par un courant électrique soit en interaction électromagnétique avec ledit aimant.

14. Dispositif selon la revendication 13, dans lequel chaque bobine conductrice (20) comprend deux bras latéraux séparés d'une distance égale au deuxième pas, la cellule élémentaire (10) étant agencée pour permettre à chaque bras latéral de la bobine conductrice (20) qu'elle porte d'être en interaction électromagnétique avec, respectivement, l'un et l'autre de deux aimants adjacents.

15. Dispositif selon la revendication 14, dans lequel le capteur de champ magnétique (30) de chaque cellule élémentaire (10), est agencé pour détecter le champ magnétique d'un aimant permanent donné avant que ce dernier ne soit en interaction électromagnétique avec la bobine conductrice (20) portée par ladite cellule.
